# EUROPEAN PATENT SPECIFICATION

(11) **EP 2 957 489 B1**
(45) Date of publication and mention of the grant of the patent: **15.02.2017**
(21) Application number: 15172785.6
(22) Date of filing: 18.06.2015
(51) Int. Cl.: B62H 3/12, B62H 3/00

(54) **BICYCLE STAND AND MULTI-TIER BICYCLE PARKING COMPRISING SUCH A BICYCLE STAND**
FAHRRADSTÄNDER UND MEHRSTÖCKIGE FAHRRADPARKANLAGE MIT SOLCH EINEM FAHRRADSTÄNDER
SUPPORT POUR BICYCLETTES ET DE STATIONNEMENT DE BICYCLETTES MULTINIVEAU COMPRENANT UN TEL SUPPORT POUR BICYCLETTES

(30) Priority: 19.06.2014 NL 2013036
(43) Date of publication of application: 23.12.2015
(73) Proprietor: MPB Concepts B.V., 5653 LC Eindhoven (NL)
(72) Inventor: PAULSSEN, Maurice Wilhelmus Léon, 5653 LC Eindhoven (NL)
(74) Representative: Algemeen Octrooi- en Merkenbureau B.V.

(56) References cited:
- EP-A1- 0 939 025
- CA-A1- 2 369 551
- DE-A1- 19 609 231
- DE-A1-102004 005 365
- DE-A1-102012 020 644
- ES-U- 1 096 234

## Description

The invention relates to a bicycle stand according to the preamble of claim 1.

A bicycle stand is generally known. In the Netherlands, such bicycle stands can for example be found near train stations or in guarded bicycle parking facilities. The generally known bicycle stands are provided in two superposed rows in a two-tier bicycle parking. In the lower bicycle stands, a bicycle is parked by being placed between support elements that are fixed to the frame of the bicycle stand. To use an upper bicycle stand, a user must first pull out a support part of an upper bicycle stand horizontally relative to the frame. The user will then pivot the end of the support part remote from the frame down to ground level so as to place a bicycle thereon. The parked bicycle is pivoted up together with the support part to a height level with the upper bicycle stand, after which the support part with the bicycle is pushed in. The pivoting movements of the support part take place about a horizontal pivot axis perpendicular to the movement of the support part. In the generally known bicycle stand, the bicycle is parked in an upright position.

EP 0939025, is considered the closest prior art and discloses all of the features of the preamble of claim 1.

20 A drawback of the generally known bicycle stand is the fact that relatively large vertical dimensions are needed for parking a bicycle when this bicycle stand is used. This means that the number of bicycles that can be parked, in particular in underground bicycle parks, is relatively limited. This is disadvantageous in particular at popular locations, because a lack of space will lead to incorrectly parked bicycles, and thus to inconvenience.

Bearing in mind the above problems, it is an object of the present invention to provide an improved bicycle stand, by means of which bicycles can be parked in a limited volume in a spatially effective manner.

In order to achieve that object, the bicycle stand according to the present invention comprises translation means and pivot means as defined in claim 1. The pivot means make it possible to park the bicycle at an angle α to the vertical direction in a bicycle stand according to the present invention. This makes it possible to realise a higher parking density, since the widest points (in particular the handlebars) of two bicycles parked beside each other can no longer touch but can overlap slightly (seen from above). The support elements stabilise the bicycle in the angular position. If the angle is selected to be sufficiently large, the height, i.e. the distance between the uppermost point (for example one end of the handlebars) and the lowermost point (for example the lowermost part of a wheel) of the inclined bicycle is smaller than in the situation in which the bicycle is parked in an upright position. The bicycle stand according to the present invention thus requires less available height than, for example, the generally known bicycle stand. The object of the present invention is thus achieved.

In one embodiment, the pivot means are configured to prevent the support part from pivoting any further than the angle α. In this way a bicycle cannot be parked at an angle larger than α, so that the bicycle is safeguarded against contact with a further object, such as the ground or a further bicycle parked beside the bicycle. Preferably, the pivot means comprise angle limiting means, such as a bumper, stop or other angle limiting means known to the skilled person.

In one embodiment, the pivot means are configured so that the support part pivots while translating between an extended position and a retracted position. The retracted position preferably corresponds to the position of the parked bicycle, and the extended position corresponds to or is spaced from the frame by the same distance as a position in which a user can easily place the bicycle on the support part. With the bicycle stand according to the present invention, the user only needs to make the translational movement by exerting a force or a pressure force in the horizontal direction on the support part or on the bicycle. The pivot means partially convert the force or pressure force being exerted into a pivoting moment, causing the support part with the bicycle present thereon to pivot. This makes it easier to use the bicycle stand according to the present invention. Preferably, the configuration of the pivot means near or at the end of the support part remote from the frame is such that the pivoting movement is made at the beginning of the translational movement toward the frame, i.e. from the extended position to the retracted position. In an advantageous embodiment, the pivot means and the translation means are combined in a guide element, for example a trolley, which moves over a rail element, for example a girder of the frame.

In one embodiment, the support part is provided with a wheel support surface for load-bearing support of a front wheel of the bicycle that is or is to be parked, wherein the wheel support surface slopes down in a substantially continuous manner between the front side and the rear side of the bicycle stand in the retracted position of the support part. As a result of the continuously downward slope of the wheel support surface and the resulting effect of the force of gravity on the front wheel, the front wheel will at all times experience a force directed toward a rear side of the bicycle stand in the parked position of the bicycle. The exact location of the point of contact between the front wheel and the wheel support surface is irrelevant in that situation. The slope of the wheel support surface and the resulting force on the front wheel will at all times automatically urge the front fork of the bicycle into abutment with the support elements. Such a sloping wheel support surface is known from NL2005812.

In one embodiment, the support elements are configured to support a front fork of the bicycle in the parked position. Each one of the support elements extends between a front side of the bicycle stand and a rear side of the bicycle stand. The support elements are placed at an angle relative to each other. Seen from above, a receiving opening for the front fork of the bicycle, which extends substantially convergingly between the front side and the rear side, is formed between the support elements. Because of the converging configuration of the receiving opening, the receiving opening is capable of accommodating front forks of varying dimensions. When the bicycle is being inserted from the front side, both sides of the front fork will eventually come into contact with the two support elements. The front fork will in that case abut against the support elements. Preferably, the (for example tubular) support elements are placed higher than the support part.

A very compact parking density is obtained if the bicycle stands according to the present invention are disposed above each other. According to one aspect, the invention therefore provides a multi-tier bicycle parking comprising a first bicycle stand and a second bicycle stand according to the present invention. By pivoting through the angle, the handlebars of the bicycle are moved in horizontal direction, so that more space is created above the first bicycle stand. The space that is created makes it possible to place the second bicycle stand at a lower vertical level in comparison with the prior art. In this way more bicycle stands according to the present invention can be disposed above each other per unit of height than in the situation in which the bicycle is parked in an upright position, as is for example the case with the generally known bicycle stand. In the multi-tier bicycle parking according to the present invention, a second tier of bicycles can be placed at a height of 1 m, whilst in the prior art the height is 2.50 m. In the multi-tier bicycle parking according to the present invention, a third tier can furthermore be added in a simple manner, at a height of 2 m. The total height of the multi-tier bicycle parking will be 3.20 m in that case, compared to a height of 4.80 m in multi-tier bicycle parkings comprising three tiers. For two-tier bicycle parkings according to the prior art and available height of 2.8 m is needed, whereas a height of about 2-2.20 m suffices in the two-tier bicycle parkings according to the present invention. Accordingly it is now possible to place a multi-tier bicycle parking in spaces that so far were not suitable for multi-tier bicycle parkings, so that a significant increase of the parking density can be realised. In this way an efficient use the available space is made. The object of the present invention is thus achieved.

In the multi-tier bicycle parking according to the present invention, the second bicycle stand is disposed above the first bicycle stand and comprises lifting means configured to move the support part of the second, upper bicycle stand, on which a cycle may or may not be present, between a lower position and an upper position. The lifting means are configured to carry out at least the lifting movement to the extended position of the support part in question. The support part and the bicycle are moved in a substantially vertical direction from a lower position to a higher position. In the lower position, the support part of the second bicycle stand is located at substantially the same height as the support part of the first bicycle stand, so that a bicycle can be easily placed on the support part of the second bicycle stand. Preferably, the lower position is the position at or near floor level. In the upper position, the support part of the second bicycle stand is located substantially above or at least near the upper side of the first bicycle stand, so that a bicycle parked in the second bicycle stand is at least partially located above a bicycle parked in the first bicycle stand. By parking the bicycles at an angle α, a bicycle parking that is compact in the height direction is obtained.

A possible embodiment of the aforesaid lifting means is described in NL1040617.

In one embodiment, the configuration of the bicycle stand as regards the angle α is such that, seen in the horizontal direction of translation of the support part of the first and/or the second bicycle stand, part of the bicycle that is or is to be parked in the first bicycle stand is located on a first side, for example a left-hand side, of the support part of the second bicycle stand in the extended position of the support part, and that said part is located on a second side substantially opposite the first side, for example a right-hand side, of the support part of the second bicycle stand in the retracted position of the support part. Thus, the aforesaid part, for example a part of the handlebars of the bicycle, for example the left-hand handle, of the bicycle in the first bicycle stand may be located to the left of a higher support part of a second bicycle stand in an extended position, whilst in the retracted position the bicycle is pivoted so that said part will be located on the right-hand side of the higher support part of the second bicycle stand.

In one embodiment, the multi-tier bicycle parking is configured so that a bicycle placed in the first bicycle stand pivots across the front of the support part of the second bicycle stand. The path of movement of the bicycle during the pivoting movement intersects an imaginary extension of a support part of a higher bicycle stand. The support part of the first bicycle stand can be translated to the extended position, such that in the extended position thereof a bicycle placed on said support part can be pivoted between an upright position and a pivoted position, wherein the bicycle that is or is to be parked intersects the axis that coincides with the longitudinal direction of the support part of the second bicycle stand during said pivoting movement. Especially advantageous is the fact that a bicycle to be parked can freely pivot and assume a suitable orientation relative to already parked, adjacent bicycles so as to avoid contact therewith upon retraction. Preferably, the position at which pivoting takes place is determined by the configuration of the pivot means of the support part.

In one embodiment, the second bicycle stand is placed so that the distance between the support part of the second bicycle stand and the support part of the first bicycle stand, measured in vertical direction, is smaller than a nominal value for the height of a bicycle to be parked. A nominal value for the height of a bicycle is for example 1.23 m. In one embodiment, the vertical distance between the first and the second bicycle stand in a multi-tier bicycle parking according to the present invention is 1 m. A two-tier bicycle parking comprising bicycle stands according to the present invention thus requires significantly less installation height or working height than a two-tier bicycle parking comprising generally known bicycle stands.

In one embodiment, a third bicycle stand is disposed above the second bicycle stand, in a manner comparable to the manner in which the second bicycle stand is disposed above the first bicycle stand. The third tier can be provided at a height of 2 m. The total required height of the space is 3.20 m, in comparison to 4.18 m for three-tier bicycle parkings according to the prior art. This means that it is also possible to install a three-tier bicycle parking in spaces that so far were not suitable for such a multi-tier bicycle parking. The parking capacity of a parking according to the present invention increases, for example by 20% up to as much as 60%, in comparison with a parking comprising the generally known bicycle stand.

The invention further relates to a method for storing a bicycle in a bicycle stand or a multi-tier bicycle parking according to the present invention. A bicycle is placed on a support part of a bicycle stand according to the present invention. The bicycle part is in the extended position in that situation, and it is conceivable that said extended position has been realised by a user in advance. The bicycle is furthermore placed between the support elements for obtaining a stable position of the bicycle.

In the method according to the present invention, the support part with the bicycle present thereon is pivoted about a pivot axis parallel to the horizontal translation direction to a pivoted position of the bicycle at an angle α relative to the vertical direction. Said pivoting is preferably carried out in the extended position, so that there will be no contact with other parked bicycles or with bicycle stands. In the pivoted position, the support part with the bicycle present thereon is translated substantially horizontally to the retracted position. In said position, the bicycle is oriented identically to previously parked bicycles and can be parked therebetween without impediment. As a result of said pivoting, the height required for parking a bicycle is reduced, making it possible to park bicycles in, for example, spaces having a height of less than the nominal height of a bicycle. Said pivoting furthermore makes it possible to park more bicycles above each other per unit of height. The object of the present invention is thus achieved.

In one embodiment, a bicycle is moved from a lower position to a higher upper position, preferably by lifting means which assist a user in vertically moving the bicycle or which partially relieve his load in doing so. Preferably, the bicycle is moved to the upper position before carrying out of the step of pivoting the bicycle to the pivoted position.

The invention will now be explained in more detail with reference to a few embodiments of the present invention. Like features are indicated by like numerals. In the description, reference is made to the following figures, in which:
Figure 1 is a schematic front view of bicycles parked in a parking comprising bicycle stands according to the prior art;
Figure 2 is a schematic front view of bicycles parked in a multi-tier bicycle parking according to an embodiment of the present invention;
Figures 3a-d are schematic side views of the second bicycle stand in an embodiment of the multi-tier bicycle parking according to the present invention, showing in succession: an extended and lower position of the support part (a); an extended and upper position of the support part (b); a pivoted, extended and upper position of the support part (c); a pivoted, retracted and upper position of the support part (d);
Figure 4 is a detail view of the support elements and the wheel support surface of a bicycle stand according to the present invention;
Figures 5a-c show schematic views of a girder of the frame (a, c) and a sectional view of a trolley (b) of a bicycle stand according to the present invention;
Figures 6a, b are schematic views of a girder of the frame, the support part, pivot means and lifting means of an embodiment of the bicycle stand according to the present invention.

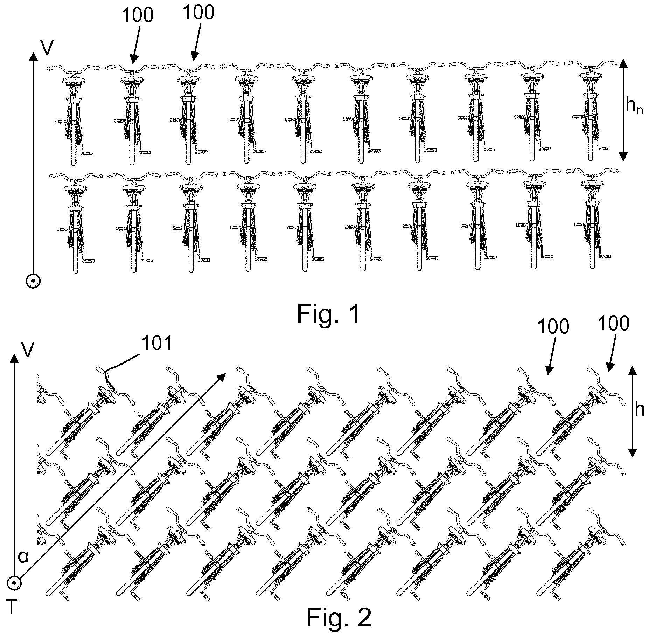

Figure 1 shows a schematic front view of bicycles parked in a multi-tier bicycle parking according to the prior art. For the sake of clarity only the bicycles are shown here, without any details of the parking. As shown clearly in figure 1, all the bicycles 100 in the generally known bicycle parking are parked in an upright position, or in other words, parallel to the vertical direction (indicated by the arrow V). All the bicycles 100 shown here have a nominal height hₙ or average height of a bicycle 100.

Figure 2 schematically shows the parking density that can be achieved with the multi-tier bicycle parking according to the present invention. In this figure, too, the individual bicycle stand is not shown for the sake of clarity; it will be explained in more detail hereinafter, however. For the sake of clarity, the bicycles 100 shown in figures 1 and 2 are identical in size. Figure 2 clearly shows that the bicycles 100 are provided at an angle α to the vertical direction V. In figure 2, the angle α is 45°, although other angles are conceivable. The value of about 40°, for example between 35° and 45°, is very advantageous because an optimum is found here between the vertical, substantially downward tilt of the frame or saddle of the bicycle 100 and the substantially upward tilt of the handlebars. In general a value of between 20° and 50° will result in an improved parking density while retaining the ease of use.

Although the height of the bicycle itself does not change, of course, the effective vertical height h a bicycle 100 actually takes up in a bicycle stand according to the present invention as shown in figure 2 is less than the nominal height hₙ indicated in figure 1. A V-shaped space 101 is formed between two adjacent, pivoted bicycles, which space can accommodate a wheel of a bicycle that is placed at a higher level. The effective vertical height h between two superposed bicycle stands can thus be less than the nominal height of the bicycle. In this way efficient use is made of the available space.

In figure 2 a total of twenty-four bicycles are parked, whereas in figure 2 the same space accommodates twenty bicycles. It is therefore possible to realise a parking density that is 20% higher. It is noted that in the schematic view of figure 2 the required height of the space must be slightly greater, so that there will be sufficient space for the handlebars of the upper row of bicycles. However, this effect can be countered by a suitable arrangement of the various bicycle stands relative to each other, for example a staggered arrangement.

By way of example it is furthermore noted that so far only one row of bicycles could be placed in normal spaces, for example spaces having a ceiling height of 2.20 - 2.30 m. The multi-tier, in particular two-tier, bicycle parking according to the present invention, on the other hand, will fit such a space. The same width now provides space for two times 8 bicycles, i.e. a total of 16 bicycles, instead of 10 bicycles (compare figure 1 with figure 2) - an increase of 60%.

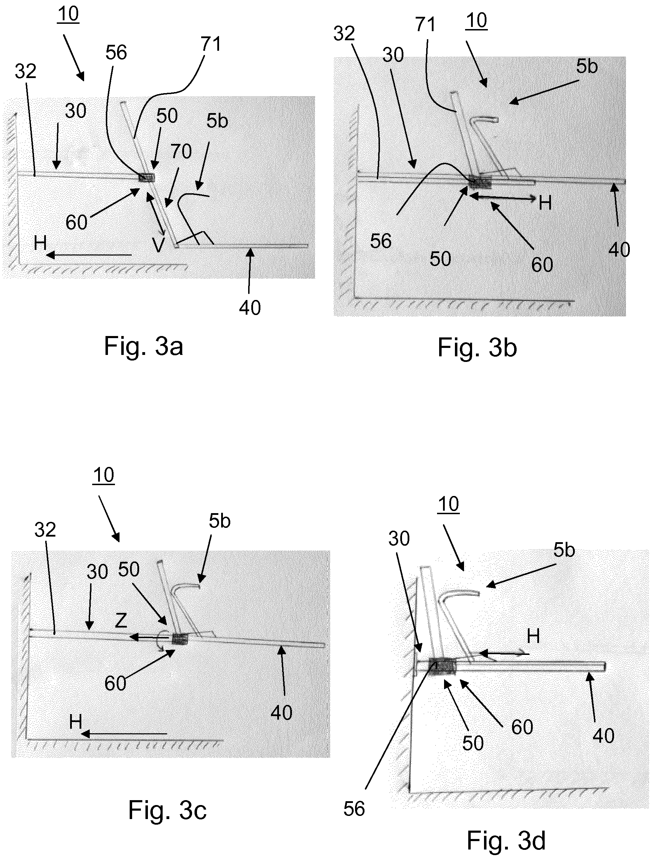

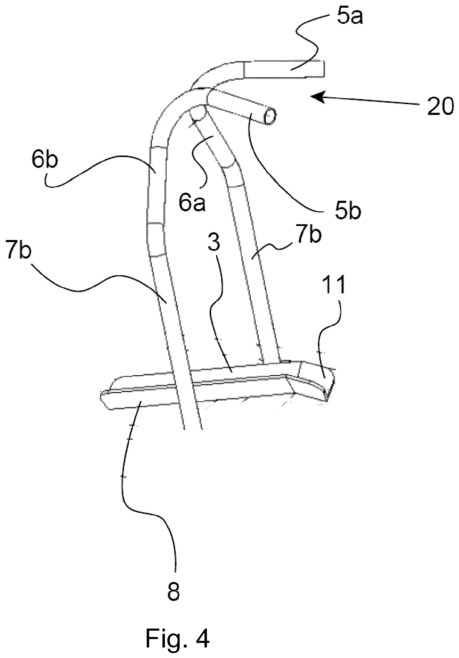

Figure 3a shows a schematic side view of a bicycle stand 10 according to the present invention, which is vertically movable. The bicycle stand 10 comprises a frame 30 with a support part 40 connected thereto. The bicycle stand comprises a guide element 56 connected to the frame, which is movable along a girder 32 of the frame 30. Said guide element 56 forms the pivot means 60 and translation means 50, for pivoting and translating, respectively, the support part 40. Lifting means 70 are furthermore provided, by means of which the support part 40 of the bicycle stand can be moved from a lower position (as shown here) to an upper position as shown in figure 3b. An example of suitable lifting means is described in the aforesaid NL1040617. The support part 40 comprises support elements 5b, which will be explained in more detail in the description of figure 4.

The support part 40 shown in figure 3a may be configured as a beam, section or gutter in which the bicycle 100 can be placed. In principle only a support surface is needed for supporting the bicycle 100, but preferably such a surface or support part 40 is provided with bicycle guiding means that keep the bicycle on the support part 40 when the bicycle 100 is being placed thereon. The bicycle guiding means may comprise a V-shaped or U-shaped section, for example. The bicycle 100 is preferably moved onto the support part 40 in the direction H from a front side, the side remote from the wall in figure 3a, i.e. from the right-hand side in figure 3a. The bicycle guiding means, for example a gutter, prevent the bicycle 100 from moving off the support part 40.

In the illustrated embodiment, the support part 40 is connected to the lifting means 70 at the end that faces the frame 30. In figure 3a the lifting means 70 are represented as a substantially vertical bar 70 which is capable of movement in upward or vertical direction V, seen in figure 3. The lifting means are movably mounted beside or in the guide element 56, as appears from figures 3a-3d. The lifting means 70 and/or the guide element 56 may be provided with guides, such as bearings, for guiding the movement of the bar 71 relative to the guide element 56. In an advantageous embodiment, the lifting means 70 are provided with compensation means, which assist a user in lifting the bicycle 100 and the support part 40 to the upper position. The compensation means for example comprise a counterweight, springs or a gas spring so as to facilitate lifting the bicycle 100, among other things. Furthermore, operating means may be provided, which operating means are connected to the lifting means and which enable the user to operate the lifting means in an ergonomically sound manner, without direct contact with the support part.

Figure 3b shows the situation in which the support part 40 has been moved upward using the lifting means 70. The support part 40 is now in an upper position, but it is still extended. In figure 3b the support part 40 is located near the guide element 56.

In this extended, upper position, the support part is pivotable about a pivot axis Z located in the girder 32 of the frame 30. The pivot means 60 and the translation means 50 can now pivot the support part 40 with the support elements 5a, b about the pivot axis Z. In the illustrated embodiment, the pivoting movement is carried out in combination with the translational movement, as shown in figure 3c.

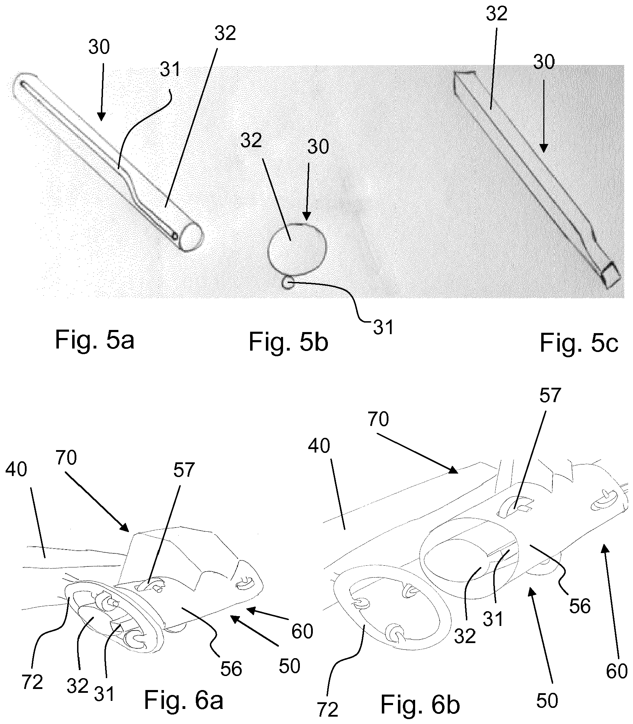

Figure 3c shows that when the translational movement in the direction H is started, the pivot means 60 simultaneously pivot the support part 40. Said pivoting preferably takes place during the first part of the translational retracting movement. In one embodiment this is made possible by configuring the end of the girder 32 remote from the wall such that the guide element 56 is forced to pivot at that end of the girder. This will be explained in more detail with reference to figures 5a, 5b and 6.

Figure 3d shows the position of the support part 40 after the translational movement has taken place. Seen in front view, a bicycle 100 placed on the support part 40 will have an inclined orientation, as shown in figure 2.

Figure 5a shows a schematic view of a girder 32 of the frame 30. The girder 32, which is an exemplary embodiment of the aforesaid rail element, is a round or oval bar 32. A guide means 31, in the form of a curved guide section 31, is provided on the surface. The guide section 31 in this case extends along substantially the entire length of the girder 32 and exhibits a curvature that can function as a cam for the pivoting of the support part.

Figure 5b is a cross-sectional view of the girder 32 of figure 5a, which shows that the guide section 31 extends from the surface of the girder 32. In an alternative embodiment, the guide section 31 is not round but square or rectangular in cross-section.

In an alternative embodiment of the girder 32, which is shown in figure 5c, the girder 32 is rectangular or square in cross-section and has a twisted end, as shown in figure 5c.

Figure 6a is a schematic view of a girder 32 of the frame 30 provided with a guide element 56 in the form of a trolley. This assembly of girder 32 and guide element 56 forms the translation means 50 and the pivot means 60 in a bicycle stand 10 according to the present invention. The trolley 56 surrounds the girder 32. The trolley 56 comprises wheels 57, which are in contact with the surface of the girder 32 so as to provide a smooth movement. The trolley 56 is internally provided with a guide (not shown), for example in the form of a shoe. The guide is in contact with the guide section 31 and follows said guide section 31, thereby providing a pivoting movement of the support part 40 upon translation. In one embodiment (not shown) the guide may consist of bearings, for example wheel bearings that run on the surface of the guide section 31, in such a manner that the trolley will assume the desired pivoted position upon translation. Because the support part 40 is fixedly connected to the guide element 56, for example the trolley 56, the support part 40 will follow the pivoting movement.

As shown in figures 6a and 6b, the lifting means 70 are movable along the guide element 56. The support part 40 is provided with a lift prevention device 72, which consists of a ring with wheels which are to be placed around girder 32. When the lift prevention device 72 is in contact with the girder 32, it is not possible to raise or lower the support part 40. This will be possible again when the lift prevention device 72 comes clear of the girder 32, as shown in figure 6b. It is noted that the lift prevention device 72 is spaced from the guide element 56 by a fixed distance, but that for the sake of clarity the spacing therebetween is made to appear to be greater in figure 6b.

Figure 4, to conclude, shows a detail view of the support elements 5a, 5b and the wheel support surface 3 of a bicycle stand 10 according to the present invention. The wheel support surface 3 is defined by a V-shaped section 8. Two side elements 7a, 7b extend upward from the support part 40. The lower parts extend substantially parallel to each other. These side elements 7a, 7b are spaced a relatively wide distance apart, such that different hub widths of different bicycle types can be placed in the bicycle stand 10. In this way sufficient space is created for placing a front wheel, including the hub, in the bicycle stand 10. Clamping of the front wheel will not be possible in the bicycle stand 10 according to the present invention. The front wheel can thus not be damaged. Connecting means 6a, 6b are placed on an upper part of the side elements. The connecting means extend slightly toward each other. The connecting means 6a, 6b are connected to the support elements 5a, 5b. The support elements are configured so that a front fork of the bicycle 100, in a parked position thereof, abuts against the support elements 5a, 5b. Seen from an upper side of the bicycle stand 10, the support elements extend at an angle relative to each other. On a front side of the bicycle stand 10, the support elements 5a, 5b are spaced a relatively great distance apart. The support elements 5a, 5b extend toward each other in rearward direction, such that the spacing between the support elements 5a, 5b becomes smaller. In this way a substantially converging receiving opening 20, seen from above, is formed between the support elements. The converging receiving opening 20 is capable of receiving front forks of different widths, such that practically any front fork will abut against the support elements 5a, 5b. The downward slope of the wheel support surface 3 ensures that the front wheel will be urged toward the parked position at all times, and that the front fork will at all times be urged into abutment with the support elements 5a, 5b.

The support elements 5a, 5b are preferably provided with a protective coating, so that the front forks of the various bicycles will not be damaged when the bicycle is being parked.

The section 8 is connected to a guide surface 11 at a part thereof located at the front side of the bicycle stand 10 that defines the wheel support surface 3. The front wheel can be placed in said guide surface so as to be placed in a parked position, after which it will be moved further to the rear of the bicycle stand 1. When the front wheel comes into contact with the continuously downward sloping wheel support surface 3, a force will be exerted on the front wheel. This force will urge the bicycle 100 to the parked position.

Only a few embodiments of the present invention are shown in the illustrated figures and discussed in the above description. The skilled person will appreciate that many variants, are possible within the scope of the present invention as defined in the claims.

## Claims

1. A bicycle stand (10), comprising:
- a frame (30); and
- a support part connected to the frame, which is configured to support at least a wheel of a bicycle (100)
that is or is to be parked, and which is provided with at
least two upwardly extending support elements (5A, 5B) configured to engage either
side of the bicycle (100), that is or is to be parked; the bicycle stand (10) further comprises:
- translation means configured to translate the support part, including the bicycle (100),
that is or is to be parked thereon, in a substantially horizontal
translation direction (T) between an extended position and a retracted position relative to the frame (30); **characterised by**, a
- pivot means configured to pivot the support part about a pivot axis (Z) parallel to the horizontal translation direction (T), such that the bicycle (100) that is or is to
be parked is placed at an angle α relative to the vertical direction (V) in a retracted position of the support part.

2. A bicycle stand (10) according to claim 1, wherein the pivot means are
configured to prevent the support part from pivoting any further than the angle α.

3. A bicycle stand (10) according to claim 1 or 2, wherein the pivot means
are configured so that the support part pivots while translating between an extended position and a retracted position.

4. A bicycle stand (10) according to any one of the preceding claims,
wherein the support part is provided with a wheel support surface (3) for load-bearing
support of a front wheel of the bicycle (100), that is or is to be parked, wherein the wheel
support surface (3) slopes down in a substantially continuous manner between the front side and the rear side of the bicycle stand in the retracted position of the support part.

5. A bicycle stand (10) according to any one of the preceding claims, wherein the support elements (5A, 5B) are configured to support a front fork of the bicycle (100), that is or is to be parked, wherein each one of the support elements (5A, 5B) extends
between a front side of the bicycle stand (10) to a rear side of the bicycle stand (10), wherein
the support elements (5A, 5B) are placed at an angle relative to each other, such that, seen
from above, a receiving opening for the front fork of the bicycle (100), which extends
substantially convergingly between the front side and the rear side, is formed between the support elements (5A, 5B).

6. A multi-tier bicycle parking, comprising
a first bicycle stand (10) according to any one of the preceding claims as
well as a second bicycle stand (10) according to any one of the preceding claims, wherein
the second bicycle stand (10) is disposed above the first bicycle stand (10), and wherein the
second bicycle stand (10) comprises lifting means configured to move the support part of
the second bicycle stand (10), including the bicycle (100) that is or is to be parked thereon, in a
substantially vertical direction (V), at least in the extended position thereof, between a lower position, in which the support part of the second bicycle stand (10) is located at
substantially the same height as the support part of the first bicycle stand (10), and an
upper position, in which support part of the second bicycle stand (10) is located
substantially above or at least near the upper side of the first bicycle stand (10).

7. A multi-tier bicycle parking according to claim 6, wherein the angle α is such that, seen in the horizontal direction of translation (T) of the support part of the first and/or the second bicycle stand (10), at least part of a bicycle (100) that is or is to be
parked in the first bicycle stand (10) is located on a first side of the support part of the
second bicycle stand (10) in the extended position of the support part and on a second
side substantially opposite the first side of the support part of the second bicycle stand (10) in the retracted position of the support part.

8. A multi-tier bicycle parking according to claim 6 or 7, wherein the second bicycle stand (10) is placed so that the distance between the support part of the
second bicycle stand (10) and the support part of the first bicycle stand (10), measured in
vertical direction, is smaller than a nominal value for the height of a bicycle to be parked.

9. A multi-tier bicycle parking according to one of claims 6 - 8, comprising a third bicycle stand (10) which is disposed above the second bicycle stand (10), wherein the height of the multi-tier bicycle parking essentially corresponds to twice a nominal value of the height of a bicycle (100), to be parked.

10. A multi-tier bicycle parking according to one of claims 6 - 9, wherein the support part of the first bicycle stand (10) can be translated to the extended position,
such that in the extended position thereof a bicycle (100) placed on said support part can
be pivoted between an upright position and a pivoted position, wherein the bicycle that is or is to be parked intersects the axis that coincides with the longitudinal direction of the support part of the second bicycle stand (10) during said pivoting
movement.

11. A method for storing a bicycle (100) in a bicycle stand (10) according to any
one of claims 1 - 5, or in a multi-tier bicycle parking according to any one of claims 6
- 10, comprising the step of placing a bicycle (100) on a support part that has been moved
to the extended position and between the support elements (5A, 5B) in a bicycle stand (10),
**characterised in that** the method comprises the further steps of:
- pivoting the bicycle (100) with the support part about a pivot axis (Z) parallel to the
horizontal translation direction (T), to a pivoted position of the bicycle (100) at an
angle α relative to the vertical direction (V), and
- in said pivoted position, translating the bicycle (100) with the support part
substantially horizontally to the retracted position.

12. A method according to claim 11 for storing a bicycle (100) in a multi-tier
bicycle parking according to any one of claims 6 - 10, wherein the method further comprises the step of moving the bicycle (100) from a lower position to a higher upper
position.

13. A method according to claim 12, wherein the step of moving the bicycle (100) from a lower position to the upper position is carried out prior to the step of pivoting the bicycle (100) to the pivoted position.

## Patentansprüche

1. Fahrradständer (10), mit:
- einem Rahmen (30); und
- einem mit dem Rahmen verbundenen Stützteil, das zum Stützen wenigstens eines Rads eines Fahrrads (100), das abgestellt ist oder werden soll, gestaltet ist, und an dem wenigstens zwei sich nach oben erstreckende Stützelemente (5A, 5B) vorgesehen sind, die zum Angreifen an beiden Seiten des Fahrrads (100), das abgestellt ist oder werden soll, gestaltet sind;
wobei der Fahrradständer (10) ferner Folgendes aufweist:
- Verschiebeeinrichtungen, die zum Verschieben des Stützteils einschließlich des Fahrrads (100), das darauf abgestellt ist oder werden soll, in einer im Wesentlichen waagrechten Verschieberichtung (T) bezüglich des Rahmens (30) zwischen einer ausgefahrenen und einer eingefahrenen Stellung gestaltet sind; **gekennzeichnet durch** eine
- Schwenkeinrichtung, die zum Schwenken des Stützteils um eine zur waagrechten Verschieberichtung (T) parallele Schwenkachse (Z) derart gestaltet ist, dass das Fahrrad (100), das abgestellt ist oder werden soll, in einer eingefahrenen Stellung des Stützteils unter einem Winkel α gegen die vertikale Richtung (V) platziert ist.

2. Fahrradständer (10) nach Anspruch 1, wobei die Schwenkeinrichtungen derart gestaltet sind, dass sie ein Schwenken des Stützteils um mehr als den Winkel α verhindern.

3. Fahrradständer (10) nach Anspruch 1 oder 2, wobei die Schwenkeinrichtungen derart gestaltet sind, dass das Stützteil während der Verschiebung zwischen einer ausgefahrenen und einer eingefahrenen Stellung verschwenkt.

4. Fahrradständer (10) nach einem der vorhergehenden Ansprüche, wobei das Stützteil mit einer Radstützfläche (3) zum tragenden Stützen eines Vorderrads des Fahrrads (100), das abgestellt ist oder werden soll, versehen ist, wobei die Radstützfläche (3) in einer im Wesentlichen kontinuierlichen Weise zwischen der Vorderseite und der Rückseite des Fahrradständers in der eingefahrenen Stellung des Stützteils schräg abfällt.

5. Fahrradständer (10) nach einem der vorhergehenden Ansprüche, wobei die Stützelemente (5A, 5B) zum Stützen einer Vorderradgabel des Fahrrads (100), das abgestellt ist oder werden soll, gestaltet sind, wobei sich jedes der Stützelemente (5A, 5B) zwischen einer Vorderseite des Fahrradständers (10) und einer Rückseite des Fahrradständers (10) erstreckt, wobei die Stützelemente (5A, 5B) in einem Winkel derart zueinander stehen, dass, von oben gesehen, zwischen den Stützelementen (5A, 5B) eine Aufnahmeöffnung für die Vorderradgabel des Fahrrads (100) gebildet ist, die sich im Wesentlichen zusammenlaufend zwischen der Vorderseite und der Rückseite erstreckt.

6. Fahrradabstellplatz mit mehreren Ebenen, mit einem ersten Fahrradständer (10) nach einem der vorhergehenden Ansprüche sowie einem zweiten Fahrradständer (10) nach einem der vorhergehenden Ansprüche, wobei der zweite Fahrradständer (10) über dem ersten Fahrradständer (10) angeordnet ist, und wobei der zweite Fahrradständer (10) Hebeeinrichtungen umfasst, die zum Bewegen des Stützteils des zweiten Fahrradständers (10), zumindest in dessen ausgefahrener Stellung, einschließlich des Fahrrads (100), das darauf abgestellt ist oder werden soll, in einer im Wesentlichen vertikalen Richtung (V) zwischen einer unteren Stellung, in der sich das Stützteil des zweiten Fahrradständers (10) auf der im Wesentlichen gleichen Höhe wie das Stützteil des ersten Fahrradständers (10) befindet, und einer oberen Stellung gestaltet sind, in der sich das Stützteil des zweiten Fahrradständers (10) im Wesentlichen über oder zumindest nahe der Oberseite des ersten Fahrradständers (10) befindet.

7. Fahrradabstellplatz mit mehreren Ebenen nach Anspruch 6, wobei der Winkel α derart ist, dass, in der waagrechten Richtung der Verschiebung (T) des Stützteils des ersten und/oder des zweiten Fahrradständers (10) gesehen, sich zumindest ein Teil eines Fahrrads (100), das im ersten Fahrradständer (10) abgestellt ist oder werden soll, in der ausgefahrenen Stellung des Stützteils auf einer ersten Seite des Stützteils des zweiten Fahrradständers (10) und in der eingefahrenen Stellung des Stützteils auf einer zweiten Seite, die der ersten Seite des Stützteils des zweiten Fahrradständers (10) im Wesentlichen gegenüberliegt, befindet.

8. Fahrradabstellplatz mit mehreren Ebenen nach Anspruch 6 oder 7, wobei der zweite Fahrradständer (10) so angeordnet ist, dass der Abstand zwischen dem Stützteil des zweiten Fahrradständers (10) und dem Stützteil des ersten Fahrradständers (10), in vertikaler Richtung gemessen, geringer ist als ein Nennwert der Höhe eines Fahrrads, das abgestellt werden soll.

9. Fahrradabstellplatz mit mehreren Ebenen nach einem der Ansprüche 6 - 8, der einen dritten Fahrradständer (10) umfasst, der über dem zweiten Fahrradständer (10) angeordnet ist, wobei die Höhe des Fahrradabstellplatzes mit mehreren Ebenen im Wesentlichen einem doppelten Nennwert der Höhe eines Fahrrads (100), das abgestellt werden soll, entspricht.

10. Fahrradabstellplatz mit mehreren Ebenen nach einem der Ansprüche 6 - 9, wobei das Stützteil des ersten Fahrradständers (10) in die ausgefahrene Stellung verschoben werden kann, derart, dass in dessen ausgefahrener Stellung ein auf dem Stützteil platziertes Fahrrad (100) zwischen einer aufrechten Stellung und einer verschwenkten Stellung verschwenkt werden kann, wobei das Fahrrad, das abgestellt ist oder werden soll, während der Schwenkbewegung die Achse, die mit der Längsrichtung des Stützteils des zweiten Fahrradständers (10) übereinstimmt, kreuzt.

11. Verfahren zum Unterbringen eines Fahrrads (100) in einem Fahrradständer (10) nach einem der Ansprüche 1 - 5 oder in einem Fahrradabstellplatz mit mehreren Ebenen nach einem der Ansprüche 6 - 10, das den Schritt des Platzierens eines Fahrrads (100) auf einem Stützteil, das in die ausgefahrene Stellung bewegt worden ist, und zwischen den Stützelementen (5A, 5B) in einem Fahrradständer (10) umfasst,
**dadurch gekennzeichnet, dass** das Verfahren folgende weitere Schritte umfasst:
- Schwenken des Fahrrads (100) mit dem Stützteil um eine zur waagrechten Verschieberichtung (T) parallele Schwenkachse (Z) in eine verschwenkte Stellung des Fahrrads (100) unter einem Winkel α gegen die vertikale Richtung (V), und
- im Wesentlichen waagrechtes Verschieben des Fahrrads (100) mit dem Stützteil in der verschwenkten Stellung in die eingefahrene Stellung.

12. Verfahren nach Anspruch 11 zum Unterbringen eines Fahrrads (100) in einem Fahrradabstellplatz mit mehreren Ebenen nach einem der Ansprüche 6 - 10, wobei das Verfahren ferner den Schritt des Bewegens des Fahrrads (100) von einer unteren Stellung in eine höhere obere Stellung umfasst.

13. Verfahren nach Anspruch 12, wobei der Schritt des Bewegens des Fahrrads (100) von einer unteren Stellung in die obere Stellung vor dem Schritt des Schwenkens des Fahrrads (100) in die verschwenkte Stellung ausgeführt wird.

## Revendications

1. Support (10) pour bicyclette, comprenant :
- un bâti (30) ; et
- une partie de soutien reliée au bâti, qui est configurée pour supporter au moins une roue d'une bicyclette (100) qui est ou doit être stationnée, et qui est munie au moins de deux éléments de support (5A, 5B) s'étendant vers le haut configurés pour s'engager avec chaque côté de la bicyclette (100) qui est ou doit être stationnée ;
le support (10) de bicyclette comprend en outre :
- des moyens de translation configurés pour déplacer par translation la partie de soutien, comportant la bicyclette (100) qui est ou doit être stationnée sur celle-ci, dans une direction de translation (T) sensiblement horizontale entre une position déployée et une position rétractée par rapport au bâti (30) ; **caractérisé par**
- des moyens de pivotement configurés pour faire pivoter la partie de soutien autour d'un axe de pivotement (Z) parallèle à la direction de translation horizontale (T), de sorte que la bicyclette (100) qui est ou doit être stationnée soit placée à un angle α par rapport à la direction verticale (V) dans une position rétractée de la partie de soutien.

2. Support (10) de bicyclette selon la revendication 1, dans lequel les moyens de pivotement sont configurés pour empêcher la partie de soutien de pivoter au-delà de l'angle α.

3. Support (10) de bicyclette selon la revendication 1 ou 2, dans lequel les moyens de pivotement sont configurés de sorte que la partie de soutien pivote tout en effectuant une translation entre une position déployée et une position rétractée.

4. Support (10) de bicyclette selon l'une quelconque des revendications précédentes, dans lequel la partie de soutien est munie d'une surface de soutien de roue (3) pour un soutien porteur d'une roue avant de la bicyclette (100) qui est ou doit être stationnée, dans lequel la surface de soutien de roue (3) est inclinée vers le bas de manière sensiblement continue entre le côté avant et le côté arrière du support de bicyclette dans la position rétractée de la partie de soutien.

5. Support (10) de bicyclette selon l'une quelconque des revendications précédentes, dans lequel les éléments de support (5A, 5B) sont configurés pour supporter une fourche avant de la bicyclette (100) qui est ou doit être stationnée, où chacun des éléments de support (5A, 5B) s'étend entre un côté avant du support (10) de bicyclette et un côté arrière du support (10) de bicyclette, où les éléments de support (5A, 5B) sont placés à un angle l'un par rapport à l'autre, de sorte que, selon une vue de dessus, une ouverture de réception pour la fourche avant de la bicyclette (100) qui s'étend sensiblement de manière convergente entre le côté avant et le côté arrière, est formée entre les éléments de support (5A, 5B).

6. Parc de stationnement pour bicyclette à plusieurs étages, comprenant un premier support (10) de bicyclette selon l'une quelconque des revendications précédentes, ainsi qu'un deuxième support (10) de bicyclette selon l'une quelconque des revendications précédentes, dans lequel le deuxième support (10) de bicyclette est disposé au-dessus du premier support (10) de bicyclette, et dans lequel le deuxième support (10) de bicyclette comprend des moyens de levage configurés pour déplacer la partie de soutien du deuxième support (10) de bicyclette, incluant la bicyclette (100) qui est ou doit être stationnée sur celle-ci, dans une direction sensiblement verticale (V), au moins dans la position déployée de celle-ci, entre une de position basse, dans laquelle la partie de soutien du deuxième support (10) de bicyclette est située sensiblement à la même hauteur que la partie de soutien du premier support (10) de bicyclette, et une position haute, dans laquelle la partie de soutien du deuxième support (10) de bicyclette est située sensiblement au-dessus ou au moins à proximité du côté supérieur du premier support (10) de bicyclette.

7. Parc de stationnement pour bicyclette à plusieurs étages selon la revendication 6, dans lequel l'angle α est tel que, selon une vue dans la direction de translation horizontale (T) de la partie de support du premier et/ou du deuxième support(s) (10) de bicyclette, au moins une partie d'une bicyclette (100) qui est ou doit être stationnée dans le premier support (10) de bicyclette est située sur un premier côté de la partie de soutien du deuxième support (10) de bicyclette dans la position déployée de la partie de soutien et sur un deuxième côté sensiblement opposé au premier côté de la partie de soutien du deuxième support (10) de bicyclette dans la position rétractée de la partie de soutien.

8. Parc de stationnement pour bicyclette à plusieurs étages selon la revendication 6 ou 7, dans lequel le deuxième support (10) de bicyclette est placé de sorte que la distance entre la partie de soutien du deuxième support (10) de bicyclette et la partie de soutien du premier support (10) de bicyclette, mesurée dans une direction verticale, est inférieure à une valeur nominale de la hauteur d'une bicyclette à stationner.

9. Parc de stationnement pour bicyclette à plusieurs étages selon l'une des revendications 6 à 8, comprenant un troisième support (10) de bicyclette, qui est disposé au-dessus du deuxième support (10) de bicyclette, dans lequel la hauteur du parc de stationnement pour bicyclette à plusieurs étages correspond essentiellement à deux fois une valeur nominale de la hauteur d'une bicyclette (100) à stationner.

10. Parc de stationnement pour bicyclette à plusieurs étages selon l'une des revendications 6 à 9, dans lequel la partie de soutien du premier support (10) de bicyclette peut être déplacée en translation vers la position déployée, de sorte que dans la position déployée de celle-ci une bicyclette (100) placée sur ladite partie de soutien peut être pivotée entre une position verticale et une position pivotée, dans lequel la bicyclette qui est ou doit être stationnée coupe l'axe qui coïncide avec la direction longitudinale de la partie de soutien du deuxième support (10) de bicyclette pendant ledit déplacement à pivotement.

11. Procédé de stockage d'une bicyclette (100) dans un support (10) de bicyclette selon l'une quelconque des revendications 1 à 5, ou dans un parc de stationnement pour bicyclette à plusieurs étages selon l'une quelconque des revendications 6 à 10, comprenant l'étape consistant à placer une bicyclette (100) sur une partie de soutien qui a été déplacée vers la position déployée et entre les éléments de support (5A, 5B) dans un support (10) de bicyclette,
**caractérisé en ce que** le procédé comprend les étapes supplémentaires consistant :
- à faire pivoter la bicyclette (100) avec la partie de soutien autour d'un axe de pivotement (Z) parallèle à la direction de translation horizontale (T), vers une position pivotée de la bicyclette (100) selon un angle α par rapport à la direction verticale (V), et
- à déplacer par translation, dans ladite position pivotée, la bicyclette (100) avec la partie de soutien sensiblement horizontalement vers la position rétractée.

12. Procédé selon la revendication 11 pour stocker une bicyclette (100) dans un parc de stationnement pour bicyclette à plusieurs étages selon l'une quelconque des revendications 6 à 10, dans lequel le procédé comprend en outre l'étape consistant à déplacer la bicyclette (100) d'une position basse vers une position haute.

13. Procédé selon la revendication 12, dans lequel l'étape de déplacement de la bicyclette (100) d'une position basse vers la position haute est effectuée avant l'étape de pivotement de la bicyclette (100) vers la position pivotée.
